# EUROPÄISCHE PATENTSCHRIFT

(11) **EP 0 525 593 B1**
(45) Veröffentlichungstag und Bekanntmachung des Hinweises auf die Patenterteilung: **20.09.1995**
(21) Anmeldenummer: 92112462.4
(22) Anmeldetag: 21.07.1992
(51) Int. Cl.: G01M 3/04, F17D 5/02

(54) **Sensorschlauch zur Überwachung eines Mediums**
Sensing hose for monitoring a medium
Tuyau capteur pour le monitorage d'un milieu

(30) Priorität: 31.07.1991 DE 4125373
(43) Veröffentlichungstag der Anmeldung: 03.02.1993
(73) Patentinhaber: SIEMENS AKTIENGESELLSCHAFT, 80333 München (DE)
(72) Erfinder: Leuker, Wilhelm, Dipl.-Phys., W-8551 Pinzberg (DE); Jax, Peter, Dr., W-8520 Erlangen (DE); Issel, Wolfgang, Dr., W-7500 Karlsruhe (DE)

(56) Entgegenhaltungen:
- DE-A- 3 321 256
- DE-C- 2 431 907
- DE-C- 3 736 177
- GB-A- 1 148 868
- US-A- 3 995 472

## Beschreibung

Die Erfindung betrifft eine Detektionsvorrichtung gemäß dem Oberbegriff des Anspruchs 1. Die Erfindung findet ihre Hauptanwendung bei der Rohrleitungsüberwachung von Chemieanlagen.

Aus dem Siemens-Prospekt "Deponie-Langzeitüberwachung mit LEOS", Bestell-Nr. A 19100-U653-A222, Juli 1990, ist eine Einrichtung zum Abdichten einer Mülldeponie sowie zur Leckage-Erkennung und -Ortung bekannt. Dabei ist vorgesehen, daß die Mülldeponie mit einer wasserdichten Folie, Dichtungsbahn oder "Abdichtung" (insbesondere aus Kunststoff) versehen ist. Diese Abdichtung kann unterhalb des Müllkörpers angeordnet sein (Basisabdichtung), damit keine Schadstoffe in das Grundwasser gelangen können. Die Abdichtung kann aber auch oberhalb des Müllkörpers verlegt sein (oberflächenabdichtung), um das Eintreten von Regenwasser und damit das Auswaschen von Schadstoffen aus dem Müll zu verhindern. Um ein Leck, das heißt eine Schadstelle, in dieser Abdichtung frühzeitig zu erkennen, ist bei der bekannten Einrichtung die Verlegung von sogenannten Sensor- oder LEOS-Schläuchen vorgesehen, und zwar auf der vom Müllkörper abgewandten Seite der Abdichtung. LEOS steht hierbei für "Leckage-Erkennungs- und Ortungs-System". Die LEOS-Schläuche, die mäanderförmig verlegt, mit Luft gefüllt und deren Wandung für verschiedene, in der Deponie vorhandene Stoffe durchlässig sind, sind an ein zentrales Überwachungssystem angeschlossen. Bei einer Plazierung der Abdichtung unterhalb des Müllkörpers wird eine Schadstelle darin durch Detektion von im Sickerwasser gelösten Stoffen lokalisiert. Und bei einer Plazierung der Abdichtung oberhalb des Müllkörpers wird eine Schadstelle darin durch Detektion von aufsteigenden Faulgasen lokalisiert.

Ein LEOS-Schlauch sowie eine Einrichtung, die zu seinem Betrieb dient, sind aus der DE-PS 24 31 907 bekannt. Es handelt sich dabei um einen Schlauch, der für gewisse Stoffe durchlässig ist. Am einen Ende des Schlauches ist eine Pumpe angeordnet. Mit dieser Pumpe werden einzelne Volumina eines Transportmediums, zum Beispiel einzelne Gas- oder speziell Luftvolumina, in zeitlichen Abständen nacheinander durch den Schlauch hindurch befördert. Der Schlauch wird auf diese Weise in regelmäßigen zeitlichen Abständen, das heißt mit gleichbleibender Frequenz, jeweils für eine Zeit lang durchströmt. Am anderen Ende des Schlauches befinden sich für die zu detektierenden Stoffe, beispielsweise Schadstoffe, empfindliche Sensoren. Falls in die Umgebung des Schlauches ein solcher Stoff gelangt, dringt dieser Stoff in den Schlauch ein; er wird mit dem nächsten Pumpvorgang des Transportmediums zu den Sensoren gebracht. Da das Medium dabei mit einer bekannten Geschwindigkeit strömt, läßt sich aus der Differenz zwischen dem Einschaltzeitpunkt der Pumpe und dem Ansprechzeitpunkt der Sensoren genau der Ort bestimmen, an dem zwischen zwei Durchströmungsvorgängen der Stoff in den Schlauch gelangt ist. Außerdem läßt sich die Stoffmenge bestimmen.

In der am 24.09.1992 veröffentlichten deutschen Patentanmeldung DE-A-41 09 520 (Anmeldetag: 22.03.1991) wird ein Element zum Abdichten und Überwachen eines Körpers, insbesondere einer Abfalldeponie, mittels eines Kontrollraums offenbart. Diesem Element liegt die Erkenntnis zugrunde, daß es sinnvoll ist, einen verstärkten Schutz durch eine Doppelbarriere zu schaffen. Dies ist sowohl bei der Basisabdichtung als auch bei der Oberflächenabdichtung einer Deponie zweckmäßig. Das Element beruht weiter auf der Überlegung, daß es auch sinnvoll ist, die Ausgestaltung so vorzunehmen, daß meßtechnisch zu erfassen ist, ob die eine oder andere Barriere ein Leck aufweist und wo dieses Leck gelegen ist. Das Element umfaßt dazu zwei Abdichtungen, die durch Stützelemente voneinander beabstandet angeordnet sind. Dabei ist mindestens ein Kanal zwischen den Abdichtungen dichtungen und den Stützelementen gebildet, der eine Eintrittsöffnung und eine Austrittsöffnung für ein Medium, wie zum Beispiel Luft, aufweist. Dieser Kanal ist dabei als permeabler LEOS-Schlauch ausgebildet, oder er beinhaltet einen solchen LEOS-Schlauch. An die Austrittsöffnung ist mindestens ein Sensor, zum Beispiel ein Sensor für Flüssigkeitsdampf und zusätzlich ein Sensor für Gas, anschließbar. Die beiden Abdichtungen sind unter Freilassung der Eintritts- und Austrittsöffnung des Kanals an ihren Rändern dicht miteinander verbunden, so daß ein Kontrollraum gebildet ist. Und die Stützelemente bestehen aus einem strömungsdurchlässigen, aber strömungsbehindernden (weitgehend homogenen) Material.

Das LEOS-Meßverfahren setzt voraus, daß der im Detektor (Sensor) zu detektierende Stoff in ausreichender Konzentration in den Sensorschlauch eindiffundieren kann, und daß er nach dem Transport durch das Transportmedium vom Detektor (Sensor) des Meßsystems angezeigt wird. Dies ist nicht gegeben bei einem Stoff mit kleiner Diffusion. Dies ist auch nicht gegeben bei einer wäßrigen Substanz, also beispielsweise bei der Uberwachung von Laugen, Säuren, Wasser in Fernwärmeleitungen oder in ähnlichen Wassernetzen, bei denen ausschließlich Wasserdampf in den permeablen Schlauch eindiffundiert. Im letzteren Fall ist wegen der normalen Bodenfeuchte ein nicht kontrollierbarer Untergrundeffekt vorhanden, so daß keine ausreichende Nachweissicherheit im Leckage-Fall gegeben ist.

Der Erfindung liegt die Aufgabe zugrunde, eine Detektionsvorrichtung der eingangs genannten Art so auszugestalten, daß auch ein Medium detektiert werden kann, für das der bekannte Sensorschlauch nicht ausreichend permeabel ist.

Die Erfindung beruht auf der Überlegung, daß durch geeignete Maßnahmen mit Hilfe des bei einer Leckage austretenden, zu überwachenden Mediums ein neuer diffusionsfähiger Stoff erzeugt werden kann, der in den Sensorschlauch eindringt und vom Transportmedium zum darauf ansprechenden Detektor oder Sensor mitgenommen wird.

Die genannte Aufgabe wird demgemäß erfindungsgemäß durch eine Detektionsvorrichtung gemäß dem Anspruch 1 gelöst.

Der diffusionsfähige und detektierbare Stoff kann insbesondere ein Gas, wie beispielsweise Wasserstoff, sein. Zum Nachweis dieses Stoffes stehen geeignete Detektoren zur Verfügung. Wasserstoff dringt auch relativ einfach in die bekannten Sensorschläuche ein.

Wasserstoff oder ein anderes Gas kann beispielsweise durch Einwirken einer Säure erzeugt werden. Bei dem Material kann es sich insbesondere um ein Metall handeln, das in Form eines Drahtes vorliegt. Es kann neben oder auf dem Sensorschlauch verlegt sein.

Die Erfindung läßt sich mit besonderem Vorteil bei der Überwachung von Rohrleitungen in Chemieanlagen, insbesondere zur Überwachung von säure- oder laugenführenden Rohren, einsetzen. Sie läßt sich aber auch auf dem Gebiet der Uberwachung von Mülldeponien verwenden. Mit geeigneten Materialien ist nämlich der Nachweis von Wasserstoff in einem Kontrollraum, der sich zwischen zwei der eingangs erwähnten Dichtungsbahnen befindet, auch möglich.

Weitere vorteilhafte Ausgestaltungen der Erfindung sind in den abhängigennsprüchen gekennzeichnet.

Ausführungsbeispiele der Erfindung werden im folgenden anhand von drei Figuren näher erläutert. Es zeigen:
- FIG 1: eine Einrichtung zur Überwachung eines Mediums, bei dem ein Sensorschlauch verwendet wird, für den im Leckagefall ein diffusionsfähiger und detektierbarer Stoff erzeugt wird;
- FIG 2: einen Sensorschlauch mit einem Reaktionsmaterial in Form eines aufgewickelten Metalldrahtes; und
- FIG 3: einen Sensorschlauch mit einem aufgebrachten Reaktionsmaterial in Form einer Folie.

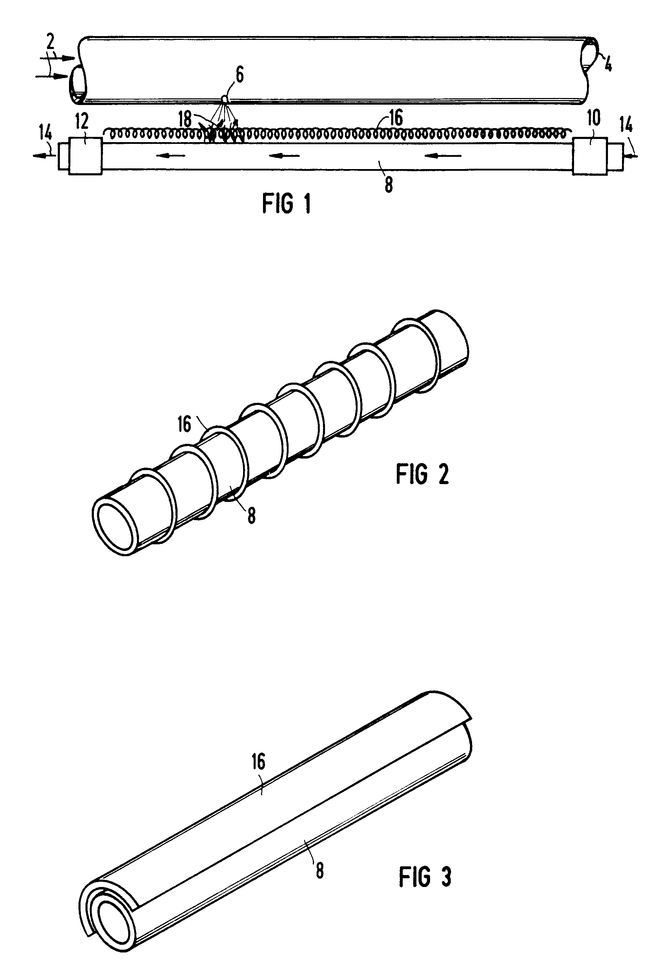

Nach Figur 1 wird ein zu überwachendes Medium 2, beispielsweise eine Säure, in einer Rohrleitung 4 geführt. Mittels der dargestellten Einrichtung wird hierbei überwacht, ob die Rohrleitung 4 möglicherweise ein Leck 6 aufweist, aus dem das Medium 2 in die Umgebung austritt. Die dargestellte Überwachungseinrichtung umfaßt im wesentlichen einen parallel zur Rohrleitung 4 verlegten Sensorschlauch 8, eine Pumpe 10 an einem Ende dieses Sensorschlauches 8 und einen Detektor oder Sensor 12 für einen nachzuweisenden Stoff am anderen Ende. Mit Hilfe der Pumpe 10 wird ein Transportmedium 14, wie beispielsweise gereinigte Luft, jeweils für eine gewisse Zeit durch den Sensorschlauch 8 gepumpt.

Wichtig ist nun, daß in der Nähe des Sensorschlauches 8 ein Material 16 angeordnet ist, das bei einer Leckage mit dem aus dem Leck 6 austretenden Medium 2 reagiert. Es erzeugt dabei einen Stoff 18, der bezüglich des Sensorschlauches 8 diffusionsfähig ist und der mittels des Detektors 12 detektierbar ist.

Bei dem Stoff 18 kann es sich insbesondere um ein Gas wie Wasserstoff handeln. Und das zu überwachende Medium 2 kann insbesondere eine Säure oder Lauge sein.

In Figur 1 ist gezeigt, daß das Reaktionsmaterial 16 ein gewendelter Draht sein kann, der parallel zum Sensorschlauch 8 verlegt ist. Bei dem Material 16 kann es sich insbesondere um ein Metall handeln. In Verbindung mit der Erzeugung von Wasserstoff kommt bei der Überwachung einer Säure-Rohrleitung 4 insbesondere Zink in Betracht.

Aus Figur 1 ist auch ersichtlich, daß sich das Material 16 bevorzugt im Raum zwischen dem Sensorschlauch 8 und der zu überwachenden Rohrleitung 4 befindet.

Der Sensorschlauch 8 kann in bekannter Weise als LEOS-Schlauch ausgebildet sein. Er kann also beispielsweise ein Drahtgeflecht umfassen. Je nach Anzahl der nachzuweisenden Substanzen oder Stoffe wird man einen oder mehrere Detektoren 12 vorsehen.

Aus Figur 2 ist eine Ausführung ersichtlich, bei der auf dem Sensorschlauch 8 das Material 16 in Form eines Drahtes aufgewickelt ist. Insbesondere kann der Draht spiral- oder wendelförmig aufgebracht sein. Natürlich können auch voneinander beabstandete Metallringe verwendet werden; der Abstand solcher Ringe beeinflußt jedoch etwas die Ortsauflösung bei der Feststellung der Leckstelle 6. Prinzipiell kann auch ein langgestreckter Draht parallel zur Längsachse des Sensorschlauches 8 verlegt und fixiert sein.

In Figur 3 ist eine Ausführungsform gezeigt, bei der das Material 16 auf dem Sensorschlauch 8 in Form einer Folie aufgebracht ist. Diese Folie 16 hat dabei die Gestalt eines Halbzylinders. Es ist ersichtlich, daß zwischen dem Sensorschlauch 8 und der Folie 16 ein geringer Abstand vorgesehen sein kann.

Je nach Medium 2 und Material 16 kann der erzeugte Stoff 18 ein besonders gutes Diffusionsverhalten aufweisen, so daß bereits kleine Leckstellen 6 mit ausreichender Signalsicherheit nachgewiesen werden können.

## Patentansprüche

1. Detektionsvorrichtung zur Überwachung einer ein Medium (2) führenden Anlage (4) mit einem Sensorschlauch (8), der für einen Stoff (18) permeabel ist und mit einem Detektor (12) für den Stoff (18) verbunden ist,
**dadurch gekennzeichnet,** daß zumindest in der Nähe des Sensorschlauches (8) ein Material (16) angebracht ist, das bei kontakt mit dem Medium (2), für das der Sensorschlauch (8) nicht ausreichend permeabel ist, unter Bildung des Stoffes (18) chemisch reagiert.

2. Detektionsvorrichtung nach Anspruch 1,
**dadurch gekennzeichnet,** daß der Stoff (18) ein diffusionsfähiges und detektierbares Gas ist.

3. Detektionsvorrichtung nach Anspruch 2,
**dadurch gekennzeichnet,** daß der Stoff (18) Wasserstoff ist.

4. Detektionsvorrichtung nach einem der Ansprüche 1 bis 3,
**dadurch gekennzeichnet,** daß das Medium (2) eine Säure oder eine Lauge ist.

5. Detektionsvorrichtung nach einem der Ansprüche 1 bis 4,
**dadurch gekennzeichnet,** daß das Material (16) die Form eines Drahtes hat.

6. Detektionsvorrichtung nach einem der Ansprüche 1 bis 5,
**dadurch gekennzeichnet,** daß das Material (16) ein Metall ist.

7. Detektionsvorrichtung nach Anspruch 6,
**dadurch gekennzeichnet,** daß das Material (16) Zink ist.

8. Detektionsvorrichtung nach einem der Ansprüche 1 bis 7,
**dadurch gekennzeichnet,** daß das Material (16) auf dem Sensorschlauch (8) aufgewickelt ist, insbesondere in Form eines wendelförmig aufgewickelten Drahtes.

9. Detektionsvorrichtung nach einem der Ansprüche 1 bis 7,
**dadurch gekennzeichnet,** daß das Material (16) auf dem Sensorschlauch (8) als Folie aufgebracht ist.

10. Detektionsvorrichtung nach einem der Ansprüche 1 bis 7,
**dadurch gekennzeichnet,** daß das Material (16) neben dem Sensorschlauch (8) und parallel zu ihm verlegt ist.

11. Detektionsvorrichtung nach einem der Ansprüche 1 bis 10,
**dadurch gekennzeichnet,** daß das Material (16) im Raum zwischen dem Sensorschlauch (8) und dem Medium (2) angeordnet ist.

12. Detektionsvorrichtung nach einem der Ansprüche 1 bis 11,
**dadurch gekennzeichnet,** daß der Sensorschlauch (8) mit einer Pumpe (10) verbunden ist.

13. Detektionsvorrichtung nach einem der Ansprüche 1 bis 12,
**dadurch gekennzeichnet,** daß das Medium (2) in einer Rohrleitung (4) geführt ist.

## Claims

1. A detecting device for monitoring a system (4) carrying a medium (2), comprising a sensor hose (8) which is permeable to a substance (18) and is connected to a detector (12) for the substance (18),
characterised in that
at least in the vicinity of the sensor hose (8) a material (16) is applied which on contact with the medium (2), to which the sensor hose (8) is not sufficiently permeable, reacts chemically with formation of the substance (18).

2. A detecting device according to claim 1, characterised in that the substance (18) is a gas which is capable of diffusion and can be detected.

3. A detecting device according to claim 2, characterised in that the substance (18) is hydrogen.

4. A detecting device according to one of claims 1 to 3, characterised in that the medium (2) is an acid or an alkaline solution.

5. A detecting device according to one of claims 1 to 4, characterised in that the material (16) is in the form of a wire.

6. A detecting device according to one of claims 1 to 5, characterised in that the material (16) is a metal.

7. A detecting device according to claim 6, characterised in that the material (16) is zinc.

8. A detecting device according to one of claims 1 to 7, characterised in that the material (16) is wound on to the sensor hose (8), in particular in the form of a helically wound wire.

9. A detecting device according to one of claims 1 to 7, characterised in that the material (16) is applied to the sensor hose (8) as a foil.

10. A detecting device according to one of claims 1 to 7, characterised in that the material (16) is laid beside the sensor hose (8) and parallel to it.

11. A detecting device according to one of claims 1 to 10, characterised in that the material (16) is disposed in the space between the sensor hose (8) and the medium (2).

12. A detecting device according to one of claims 1 to 11, characterised in that the sensor hose (8) is connected to a pump (10).

13. A detecting device according to one of claims 1 to 12, characterised in that the medium (2) is carried in a pipeline (4).

## Revendications

1. Tuyau capteur pour le monitorage d'un dispositif (4) parcouru par un milieu (2) comprenant un flexible capteur (8) perméable à une substance (18) et relié à un détecteur (12) pour ladite substance (18), caractérisé en ce qu'une matière (16) est mise en place au moins dans le voisinage du flexible capteur (8), matière qui produit une réaction chimique au contact avec le milieu (2) pour lequel le flexible capteur (8) n'est pas suffisamment perméable, sous formation de la substance (18).

2. Tuyau capteur selon la revendication 1, caractérisé en ce que la substance (18) est un gaz apte à être diffusé et détecté.

3. Tuyau capteur selon la revendication 2, caractérisé en ce que la substance (18) est de l'hydrogène.

4. Tuyau capteur selon l'une des revendications 1 à 3, caractérisé en ce que le milieu (2) est soit un acide soit une base.

5. Tuyau capteur selon l'une des revendications 1 à 4, caractérisé en ce que la matière (16) présente la forme d'un fil métallique.

6. Tuyau capteur selon l'une des revendications 1 à 5, caractérisé en ce que la matière (16) consiste en un métal.

7. Tuyau capteur selon la revendication 6, caractérisé en ce que la matière (16) est du zinc.

8. Tuyau capteur selon l'une des revendications 1 à 7, caractérisé en ce que la matière (16) est enroulée sur le flexible capteur (8), particulièrement sous forme d'un fil métallique enroulé en hélice.

9. Tuyau capteur selon l'une des revendications 1 à 7, caractérisé en ce que la matière (16) est appliquée sur le flexible capteur (8) sous forme de feuille.

10. Tuyau capteur selon l'une des revendications 1 à 7, caractérisé en ce que la matière (16) est mise en place à côté du flexible capteur (8) et parallèlement à celui-ci.

11. Tuyau capteur selon l'une des revendications 1 à 10, caractérisé en ce que la matière (16) est disposée dans l'espace situé entre le flexible capteur (8) et le milieu (2).

12. Tuyau capteur selon l'une des revendications 1 à 11, caractérisé en ce que le flexible capteur (8) est relié à une pompe (10).

13. Tuyau capteur selon l'une des revendications 1 à 12, caractérisé en ce que le milieu (2) passe par un conduit (4).
